# EUROPEAN PATENT SPECIFICATION

(11) **EP 2 762 331 B1**
(45) Date of publication and mention of the grant of the patent: **03.04.2019**
(21) Application number: 14152054.4
(22) Date of filing: 22.01.2014
(51) Int. Cl.: B60C 11/00

(54) **Tire for use in two-wheeled automotive vehicle**
Reifen zur Verwendung in einem zweirädrigen Fahrzeug
Pneu à utiliser dans un véhicule automobile à deux roues

(30) Priority: 04.02.2013 JP 2013019207
(43) Date of publication of application: 06.08.2014
(73) Proprietor: SUMITOMO RUBBER INDUSTRIES, LTD., Kobe-shi, Hyogo 651-0072 (JP)
(72) Inventor: Okada, Takashi, Kobe-shi,, Hyogo 651-0072, (JP)
(74) Representative: TBK

(56) References cited:
- EP-A1- 1 800 906
- GB-A- 2 121 737
- JP-A- S6 025 805
- JP-A- 2004 142 533
- US-A1- 2003 145 935

## Description

### BACKGROUND OF THE INVENTION

### Field of the Invention

The present invention relates to pneumatic tires that are to be mounted to two-wheeled automotive vehicles.

### Description of the Background Art

Centrifugal force is applied to a two-wheeled automotive vehicle during cornering. For cornering, cornering force that matches the centrifugal force is required. In the cornering, a rider leans the two-wheeled automotive vehicle toward an inner side. The cornering is achieved by camber thrust caused by the leaning. In order to facilitate the cornering, a tire for use in two-wheeled automotive vehicles includes a tread having a small radius of curvature. In straight running, a tread contacts with the ground at a center region of the tread. In cornering, a region of the tread which contacts with the ground shifts from the center region to a shoulder region located on the outer side in the axial direction.

In JP 2007-168531 A, a generic tire is disclosed in which a tread is divided into five portions in the axial direction and is formed by crosslinked rubbers having different moduli. In this tire, the tread contacts with the ground at a center region of the tread during straight running. Since a modulus is high in the center region, steering stability in straight running is excellent. In cornering, the tread contacts with the ground mainly at a shoulder region of the tread. Since a modulus is low in the shoulder region, a grip performance in cornering is excellent. A modulus of a region between the center region and each shoulder region has a value between a value of the modulus of the center region and a value of the modulus of each shoulder region, and thus a transient characteristic for shift between cornering and straight running is excellent. This tire includes a belt which is layered, over a carcass, inward of the tread and is formed by a belt cord and a topping rubber. The belt is constituted by a single belt ply wherein a tilt angle of the belt cord is equal to or greater than 10 degrees and is equal to or smaller than 35 degrees relative to the equator plane, or by an inner belt ply and an outer belt ply wherein the tilt angle of the cord of the inner belt ply relative to the equator plane is reverse to that of the cord of the outer belt ply relative to the equator plane.

In US 2003/145935 A1, GB 2 121 737 A and JP 2004-142533 A, tires are disclosed in which a belt extends inward of the sidewalls of the tire in the axial direction and a tilt angle of the belt cord is 35 degrees or less relative to the equator plane. In JP S60-25805 A, a tire is disclosed in which a reinforcement layer is arranged outward of a carcass so that both ends of the reinforcement layer arrive at a bead part at a cord angle of 45 to 85 degrees.

### SUMMARY OF THE INVENTION

In a race or the like, straight running and cornering are frequently repeated. The contact region in the tread rapidly shifts according to shift between the straight running and the cornering. Due to the rapid shift of the contact region, a great lateral force is applied to the shoulder region. In the tire, since a modulus of the shoulder region is low, steering stability in cornering is poor. For the tire, steering stability needs to be further improved.

An object of the present invention is to make available a tire, for use in two-wheeled automotive vehicles, which is excellent in grip performance, steering stability, and transient characteristic.

A tire, for use in a two-wheeled automotive vehicle, according to the present invention includes the features defined in claim 1.

In the tire, for use in a two-wheeled automotive vehicle, according to the present invention, the modulus Mc of the center region is high, and the tire is thus excellent in steering stability in straight running. In the tire, the modulus Ms of each shoulder region is low, and the tire is thus excellent in grip performance in cornering. The tire includes the belt that extends to the sidewalls, and is thus excellent also in transient characteristic and steering stability in cornering.

For more preferred ranges of the ratio Hb/H and the tilt angle it is referred to the description of the preferred embodiments below.

### BRIEF DESCRIPTION OF THE DRAWINGS

FIG. 1 is a schematic cross-sectional view of a tire, for use in two-wheeled automotive vehicles, according to one embodiment of the present invention;
FIG. 2 illustrates a portion of a ribbon of a belt of the tire shown in FIG. 1; and
FIG. 3 illustrates a portion of a belt manufacturing method.

### DESCRIPTION OF THE PREFERRED EMBODIMENTS

Hereinafter, the present invention will be described in detail based on preferred embodiments, with reference to the drawings.

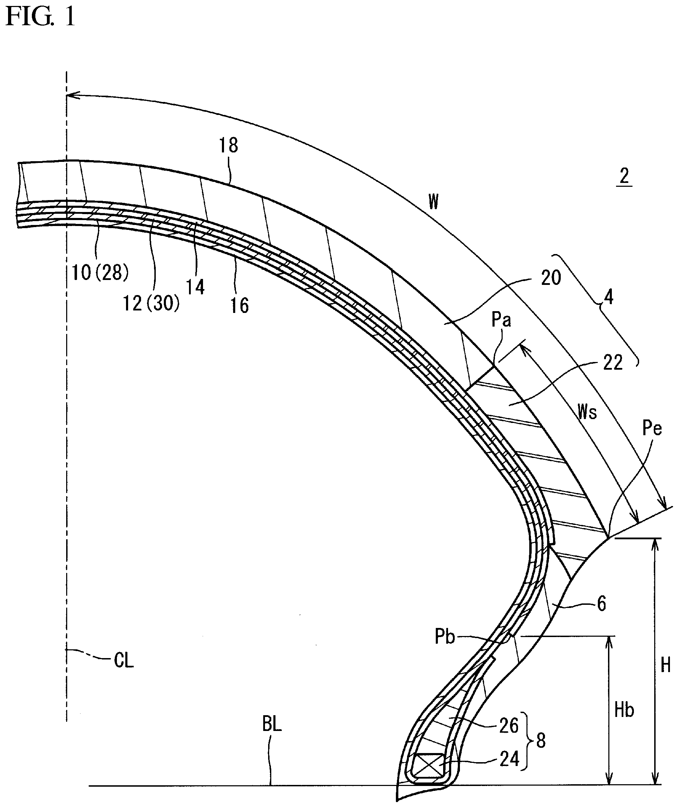

FIG. 1 is a schematic cross-sectional view of a tire 2 according to one embodiment of the present invention. It is noted that FIG. 1 is not drawn true to scale. In FIG. 1, the upward/downward direction represents the radial direction, the leftward/rightward direction represents the axial direction, and the direction orthogonal to the surface of the sheet represents the circumferential direction. An alternate long and short dash line CL represents the equator plane. A solid line BL represents a bead base line. The tire 2 includes a tread 4, sidewalls 6, beads 8, a carcass 10, a belt 12, a band 14, and an inner liner 16. The tire 2 is a tubeless pneumatic tire. The tire 2 is mounted to a two-wheeled automotive vehicle.

The tread 4 has a shape projecting outward in the radial direction. The tread 4 includes a tread surface 18 that contacts with a road surface. The tread 4 includes one center region 20 and a pair of shoulder regions 22. The center region 20 is disposed in the center portion, in the axial direction, of the tread 4, and extends over the equator plane. The shoulder regions 22 are disposed outward of the center region 20 in the axial direction.

A point Pe in FIG. 1 represents a tread end. A point Pa represents a boundary, in the tread surface 18, between the center region 20 and each shoulder region 22. A double-headed arrow W represents half the width of the tread 4, and the half the width is a width from the equator plane to the tread end Pe. A double-headed arrow Ws represents a width of each shoulder region 22, that is, a width from the boundary Pa to the tread end Pe. The half the width W and the width Ws are each obtained by a cross section of a sample cut from the tire 2 being measured along the tread surface 18.

In the tread 4, the center region 20 and the shoulder regions 22 are each formed by a crosslinked rubber composition. A modulus Mc of the rubber composition of the center region 20 is higher than a modulus Ms of the rubber composition of the shoulder regions 22. The modulus Mc and the modulus Ms each represent a tensile stress (MPa) obtained when elongation is 300%. The modulus Mc and the modulus Ms are measured in compliance with the standard of "JIS K 6251". For the measurement, "Strograph-T" manufactured by Toyo Seiki Seisaku-sho, Ltd. is used. The measurement temperature is 100°C. For the measurement, a sample based on JIS dumbbell No. 3 is used.

The sidewalls 6 extend from the ends of the tread 4 in the radially inward direction. The sidewalls 6 are formed by a crosslinked rubber composition. The sidewalls 6 absorb impact from a road surface due to their flexure. Further, the sidewalls 6 prevent the carcass 10 from being damaged.

The beads 8 extend from the sidewalls 6 in the radially inward direction. Each bead 8 includes a core 24 and an apex 26 that extends from the core 24 in the radially outward direction. The core 24 is ring-shaped, and includes a plurality of non-stretchable wires (typically, steel wires). The apex 26 is tapered in the radially outward direction. The apex 26 is formed by a crosslinked rubber composition. The apex 26 has a high hardness.

The carcass 10 includes a carcass ply 28. The carcass ply 28 extends, on and between the beads 8 located on both sides, along inner sides of the tread 4 and the sidewalls 6. The carcass ply 28 is wound around the core 24 from the inner side toward the outer side in the axial direction.

The carcass ply 28 includes a cord and a topping rubber, which is not shown. An absolute value of an angle of the cord relative to the equator plane typically ranges from 70 degrees to 90 degrees. In other words, the tire 2 is a radial tire. The cord is typically formed by an organic fiber. Preferable examples of the organic fiber include polyester fibers, nylon fibers, rayon fibers, polyethylene naphthalate fibers, and aramid fibers. The carcass may be formed as a single ply. The carcass may have a cross-ply structure.

The belt 12 is disposed between the carcass 10 and the tread 4. The belt 12 is formed by a belt ply 30. The belt ply 30 includes multiple belt cords aligned with each other, and a topping rubber. Each belt cord is tilted relative to the equator plane. An absolute value of an angle of each belt cord relative to the equator plane is greater than or equal to 70 degrees, and is not greater than 90 degrees. The absolute value of the angle of the belt cord relative to the equator plane is referred to as a tilt angle of the belt cord. In the tire 2, the belt cords and the carcass cord meet each other in a range where the tilt angle is greater than or equal to 70 degrees, and is not greater than 90 degrees. From the viewpoint of the reinforcing effect by the belt 12, a direction in which each belt cord is tilted relative to the equator plane and a direction in which the carcass cord is tilted relative to the equator plane are preferably opposite to each other. A material of the belt cords is a steel or an organic fiber. Specific examples of the organic fiber include aramid fibers, nylon fibers, polyester fibers, rayon fibers, and polyethylene naphthalate fibers.

The belt 12 extends beyond the tread end Pe from the outer side toward the inner side in the radial direction. The belt 12 extends from the inner side, in the axial direction, of one of the sidewalls 6 to the inner side, in the axial direction, of the other of the sidewalls 6. A point Pb in FIG. 1 represents the end of the belt 12 that extends to the inner side in the axial direction.

The band 14 is disposed outward of the belt 12 in the radial direction. The band 14 includes a cord and a topping rubber, which is not shown. The cord is helically wound.

The band 14 has a so-called jointless structure. The cord extends substantially in the circumferential direction. An angle of the cord relative to the circumferential direction is less than or equal to 5 degrees, and more preferably less than or equal to 2 degrees. The cord is formed by an organic fiber. Preferable examples of the organic fiber include nylon fibers, polyester fibers, rayon fibers, polyethylene naphthalate fibers, and aramid fibers.

The inner liner 16 is bonded to the inner circumferential surface of the carcass 10. The inner liner 16 is formed by a crosslinked rubber composition. For the inner liner 16, a rubber that has an excellent air-sealing property is used. A typical base rubber of the inner liner is a butyl rubber or a halogenated butyl rubber. The inner liner functions so as to maintain an internal pressure of the tire.

In FIG. 1, a double-headed arrow Hb represents a height from the bead base line to the end Pb of the belt 12. A double-headed arrow H represents a height from the bead base line to the tread end Pe. The height Hb and the height H are each measured as a distance, in the radial direction, on a cross section of a sample cut from the tire 2. In the tire 2, a ratio Hb/H of the height Hb from the bead base line to the end Pb of the belt 12 relative to the height H from the bead base line to the tread end Pe is set so as to be greater than or equal to 0.1, and not greater than 0.5.

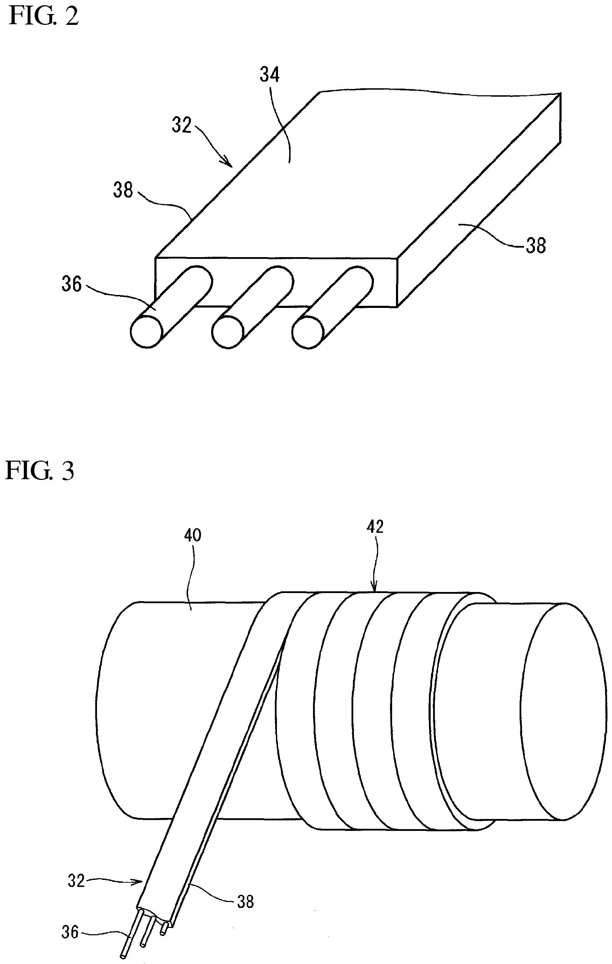

FIG. 2 shows a ribbon 32 for forming the belt 12. The ribbon 32 includes a topping rubber 34 and three cords 36. A base polymer of the topping rubber 34 is in an uncrosslinked state. The topping rubber 34 is formed as the topping rubber of the belt ply 30. Each cord 36 extends in the longitudinal direction of the ribbon 32. The number of the cords 36 may be one, two, four, or greater than four. The cords 36 are formed as the belt cords of the belt ply 30. The cross-sectional shape of the ribbon 32 is rectangular. The ribbon 32 has two side surfaces 38.

As shown in FIG. 3, the ribbon 32 is helically wound around a drum 40. The pitch of the helical winding is equal to or slightly less than the width of the ribbon 32. By this winding, the side surfaces 38 are bonded to the side surfaces 38 adjacent thereto. By this winding, a cylindrical body 42 is obtained. In the cylindrical body 42, a direction in which the cords 36 extend is substantially the same as the circumferential direction. To be exact, because of the helical winding, the cords 36 are slightly tilted relative to the circumferential direction.

The cylindrical body 42 is cut along a direction that is tilted relative to the axial direction of the drum 40, thereby obtaining a sheet (not shown). The cords 36 extend so as to be tilted relative to the cut surface obtained by the cutting. The sheet is cut. A direction in which the sheet is cut is parallel to the cut surface. By this cutting, the belt ply 30 is obtained. In the belt ply 30, the cords 36 extend so as to be tilted relative to the longitudinal direction of the belt ply. The angle at which the cords 36 are tilted is set to the tilt angle of the belt cord of the belt 12 at the equator plane.

In the tire 2, the inner liner 14, the carcass ply 28, and the belt ply 30 are layered in order, respectively, from the inner side toward the outer side in the radial direction. A ribbon of the band 14 is helically wound in the circumferential direction so as to be located outward of the belt ply 30 in the radial direction. Further, the center region 20 and the shoulder regions 22 of the tread 4 are layered outward of the band 14 in the radial direction. The center region 20 and the shoulder regions 22 may be formed by ribbons being helically wound in the circumferential direction (may be formed in a so-called strip winding method), or may be formed by extrusion method. Thus, a raw cover (uncrosslinked tire) is obtained. This raw cover is pressurized and heated in a mold. A crosslinking reaction occurs in molecules of rubber due to the heating, thereby obtaining the tire 2.

In the tire 2, the center region 20 mainly contacts with the ground in straight running. On the other hand, in cornering, the shoulder region 22 mainly contacts with the ground. In this viewpoint, a ratio (Ws/W) of the width Ws of the shoulder region 22 to the half the width W of the tread 4 is preferably greater than or equal to 0.1, and not greater than 0.3. Since the modulus Mc of the rubber composition of the center region 20 is high, the center region 20 contributes to improvement of steering stability. Since the modulus Ms of the rubber composition of the shoulder regions 22 is low, the shoulder regions 22 contribute to improvement of grip performance.

Since the belt 12 extends to portions inward of the shoulder regions 22 of the tire 2 in the radial direction, stiffness is excellent in the shoulder regions 22. Since the ratio Hb/H is set so as to be not greater than 0.5, even when the two-wheeled automotive vehicle runs in a so-called full bank state where the two-wheeled automotive vehicle is tilted up to the limit, stiffness can be excellent. In this viewpoint, the ratio Hb/H is preferably not greater than 0.4, and more preferably not greater than 0.3.

The belt 12 extends inward of the sidewalls 6 in the axial direction, thereby enhancing the stiffness of the sidewalls 6. Excessive enhancement of the stiffness of the sidewalls 6 causes reduction of steering stability. In the tire 2, since the ratio Hb/H is set so as to be greater than or equal to 0.1, steering stability is less likely to be reduced. In this viewpoint, the ratio Hb/H is preferably greater than or equal to 0.2, and more preferably greater than or equal to 0.3.

In the tire 2 in which the tilt angle of the belt cords of the belt 12 is great, stiffness in the axial direction is excellent. Stiffness can be high with respect to a lateral force applied in cornering. In this viewpoint, the tilt angle of the belt cord at the equator plane is preferably greater than or equal to 70 degrees, more preferably greater than or equal to 75 degrees, and particularly preferably greater than or equal to 80 degrees. The tilt angle of the belt cord has a maximum value when the belt cords are orthogonal to the circumferential direction, and the maximum value is 90 degrees.

On the other hand, when the belt cords have a small tilt angle, durability against a lateral force applied in the axial direction is excellent. In this viewpoint, the tilt angle of the belt cords is preferably not greater than 85 degrees, and more preferably not greater than 80 degrees.

The cord formed by an organic fiber has a reduced stretchability. The cord having a reduced stretchability contributes to enhancement of stiffness. In the tire 2, the belt cords of the belt 12 are preferably formed by an organic fiber. Preferable examples of the organic fiber include aramid fibers, nylon fibers, and rayon fibers.

In the tire 2, the contact region shifts between the center region 20 and the shoulder region 22 when shift between straight running and cornering occurs. The belt 12 extends inward of the center region 20 and the shoulder regions 22 in the radial direction. Therefore, great variation of stiffness is reduced even when the contact region shifts. The tire 2 is excellent in transient characteristic for shift between straight running and cornering.

When shift between straight running and cornering occurs, variation in stiffness of the tire 2 in the axial direction exerts a great influence on a transient characteristic. In the tire in which the belt cord has a great tilt angle, great variation of stiffness in the axial direction is reduced. The tire 2 in which the tilt angle of the belt cords is greater than or equal to 70 degrees, is excellent also in transient characteristic. Further, in the tire in which the belt cord has a reduced stretchability, great variation of stiffness in the axial direction is reduced. The tire 2 having the belt cords formed by an organic fiber is excellent also in transient characteristic.

In the present invention, the dimensions and angles of the components of the tire 2 are measured in a state where the tire 2 is mounted to a normal rim, and the tire is inflated with air to a normal internal pressure, unless otherwise specified. During the measurement, no load is applied to the tire. In the description herein, the normal rim represents a rim that is specified according to the standard with which the tire complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure.

### [Examples]

Hereinafter, effects of the present invention will become apparent according to examples. However, the present invention should not be restrictively construed based on the description of examples.

### [Example 1]

A tire, for use in a two-wheeled automotive vehicle, having the structure shown in FIG. 1 was obtained. The size of the tire was "180/55R17". A tread of the tire had a center region and a pair of shoulder regions. A modulus Mc of the center region was 4.0 MPa, and a modulus Ms of each shoulder region was 3.0 MPa. A ratio Hb/H of a height Hb from the bead base line to an end of a belt to a height H from the bead base line to a tread end was 0.3. The tilt angle of a belt cord was 80 degrees.

### [Examples 2 to 3 and Comparative example 1]

Tires were each obtained in the same manner as for Example 1 except that ratios Hb/H were as indicted below in Table 1.

### [Examples 4 to 6]

Tires were each obtained in the same manner as for Example 1 except that the tilt angles of belt cords were different.

### [Comparative example 2]

A tire was obtained in the same manner as for Example 1 except that rubber compositions of a center region and shoulder regions were different.

### [Sensory evaluation]

The tires were mounted to normal rims of "MT5.50×17", and were inflated with air such that an internal pressure was 290 kPa. Each tire was mounted to a rear wheel of a two-wheeled automotive vehicle having an engine displacement of 600 cm³. A conventional tire was mounted to a front wheel as it was. The two-wheeled automotive vehicle was caused to run on a dry paved road in a racing circuit. Evaluations for steering stability, grip performance, and transient characteristic were made by a rider.

Steering stability was evaluated, by a rider, based on how high a limit speed at cornering was. The greater the index is, the higher the limit speed is, that is, the more excellent cornering performance is. Grip performance at running in a full bank state was evaluated as grip performance by the rider. Transient characteristic was evaluated, by the rider, based on how the rider felt that stiffness varied when straight running shifted to cornering. The results are indicated below as indexes in Table 1. Each index is indicated with 10 being the best score. The greater the index is, the better the result is.

### [Table 1]

**Table 1 Evaluation results**

| | Comparative example 1 | Example 2 | Example 1 | Example 3 |
|---|---|---|---|---|
| Mc (MPa) | 4.0 | 4.0 | 4.0 | 4.0 |
| Ms (MPa) | 3.0 | 3.0 | 3.0 | 3.0 |
| Hb/H | 0.7 | 0.5 | 0.3 | 0.1 |
| Tilt angle (degrees) | 80 | 80 | 80 | 80 |
| Steering stability | 4.0 | 5.5 | 6.5 | 6.0 |
| Grip performance | 4.5 | 5.0 | 6.0 | 5.0 |
| Transient characteristic | 4.5 | 5.5 | 5.5 | 5.0 |

### [Table 2]

**Table 2 Evaluation results**

| | Example 6 | Example 5 | Example 4 | Comparative example 2 |
|---|---|---|---|---|
| Mc (MPa) | 4.0 | 4.0 | 4.0 | 4.0 |
| Ms (MPa) | 3.0 | 3.0 | 3.0 | 4.0 |
| Hb/H | 0.3 | 0.3 | 0.3 | 0.3 |
| Tilt angle (degrees) | 60 | 70 | 90 | 80 |
| Steering stability | 4.5 | 5.0 | 5.0 | 4.0 |
| Grip performance | 4.0 | 5.0 | 5.5 | 4.0 |
| Transient characteristic | 5.0 | 5.5 | 6.0 | 4.0 |

As indicated in Table 1 and Table 2, tires according to examples are excellent in steering stability, grip performance, and transient characteristic. The evaluation results clearly indicate that the present invention is superior.

The tire according to the present invention is applicable to either one of a front wheel or a rear wheel of a two-wheeled automotive vehicle. The tire is particularly applicable to two-wheeled automotive vehicles for race.

## Claims

1. A tire (2) for use in a two-wheeled automotive vehicle, the tire (2) comprising:
a tread (4) having an outer surface that forms a tread surface (18);
a pair of sidewalls (6) extending from ends (Pe), respectively, of the tread (4) inward in a radial direction;
a pair of beads (8) disposed inward of the sidewalls (6), respectively, in the radial direction;
a carcass (10) extending, on and between one of the beads (8) and the other of the beads (8), along inner sides of the tread (4) and the sidewalls (6); and
a belt (12) layered, over the carcass (10), inward of the tread (4) in the radial direction, wherein
the tread (4) includes a center region (20), and a pair of shoulder regions (22) disposed outward of the center region in an axial direction,
the center region (20) and the shoulder regions (22) are each formed by a crosslinked rubber composition,
a modulus Ms of the rubber composition of each shoulder region (22) is lower than a modulus Mc of the rubber composition of the center region (20),
the belt (12) is formed by a belt cord (36) and a topping rubber (34), and
the belt (12) extends inward of the sidewalls (6) in the axial direction,
**characterized in that**
a ratio Hb/H of a height Hb from a bead base line (BL) to an end (Pb) of the belt (12) relative to a height H from the bead base line (BL) to each end (Pe) of the tread (4) is greater than or equal to 0.1, and not greater than 0.5, and
a tilt angle of the belt cord (36) is greater than or equal to 70 degrees relative to the equator plane (CL) of the tire, and not greater than 90 degrees.

2. The tire according to claim 1, wherein
the ratio Hb/H is greater than or equal to 0.2.

3. The tire according to claim 2, wherein
the ratio Hb/H is greater than or equal to 0.3.

4. The tire according to any one of claims 1 to 3, wherein
the ratio Hb/H is not greater than 0.4.

5. The tire according to claim 4, wherein
the ratio Hb/H is not greater than 0.3.

6. The tire according to any one of claims 1 to 5, wherein
the tilt angle is greater than or equal to 75 degrees.

7. The tire according to claim 6, wherein
the tilt angle is greater than or equal to 80 degrees.

8. The tire according to any one of claims 1 to 7, wherein
the tilt angle is not greater than 85 degrees.

9. The tire according to claim 8, wherein
the tilt angle is not greater than 80 degrees.

10. The tire according to any one of claims 1 to 9, wherein
the belt cord (36) is formed by an organic fiber.

## Patentansprüche

1. Reifen (2) zur Verwendung in einem zweirädrigen Kraftfahrzeug, wobei der Reifen (2) Folgendes umfasst:
eine Lauffläche (4) mit einer Außenfläche, die eine Profilfläche (18) bildet;
ein Paar Seitenwände (6), die sich von jeweiligen Enden (Pe) der Lauffläche (4) aus in einer radialen Richtung nach innen erstrecken;
ein Paar Wülste (8), die in der radialen Richtung jeweils einwärts von den Seitenwänden (6) angeordnet sind;
eine Karkasse (10), die sich entlang von Innenseiten der Lauffläche (4) und der Seitenwände (6) auf und zwischen einem der Wülste (8) und dem anderen der Wülste (8) erstreckt; und
einen Gürtel (12), der in der radialen Richtung einwärts von der Lauffläche (4) über der Karkasse (10) aufgeschichtet ist, wobei
die Lauffläche (4) einen zentralen Bereich (20) und ein Paar Schulterbereiche (22), die in einer axialen Richtung außerhalb des zentralen Bereichs angeordnet sind, umfasst,
der zentrale Bereich (20) und die Schulterbereiche (22) jeweils aus einer vernetzten Gummizusammensetzung ausgebildet sind,
ein Modul Ms der Gummizusammensetzung jedes Schulterbereichs (22) kleiner als ein Modul Mc der Gummizusammensetzung des zentralen Bereichs (20) ist,
der Gürtel (12) aus einem Gürtelcord (36) und einer Gummierung (34) ausgebildet ist und
sich der Gürtel (12) in der axialen Richtung einwärts von den Seitenwänden (6) erstreckt,
**dadurch gekennzeichnet, dass**
ein Verhältnis Hb/H einer Höhe Hb von einer Wulstgrundlinie (BL) zu einem Ende (Pb) des Gürtels (12) bezüglich einer Höhe H von der Wulstgrundlinie (BL) zu jedem Ende (Pe) der Lauffläche (4) größer oder gleich 0,1 und nicht größer als 0,5 ist und
ein Neigungswinkel des Gürtelcords (36) bezüglich der Äquatorlinie (CL) des Reifens größer oder gleich 70 Grad und nicht größer als 90 Grad ist.

2. Reifen nach Anspruch 1, wobei
das Verhältnis Hb/H größer oder gleich 0,2 ist.

3. Reifen nach Anspruch 2, wobei
das Verhältnis Hb/H größer oder gleich 0,3 ist.

4. Reifen nach einem der Ansprüche 1 bis 3, wobei
das Verhältnis Hb/H nicht größer als 0,4 ist.

5. Reifen nach Anspruch 4, wobei
das Verhältnis Hb/H nicht größer als 0,3 ist.

6. Reifen nach einem der Ansprüche 1 bis 5, wobei
der Neigungswinkel größer oder gleich 75 Grad ist.

7. Reifen nach Anspruch 6, wobei
der Neigungswinkel größer oder gleich 80 Grad ist.

8. Reifen nach einem der Ansprüche 1 bis 7, wobei
der Neigungswinkel nicht größer als 85 Grad ist.

9. Reifen nach Anspruch 8, wobei
der Neigungswinkel nicht größer als 80 Grad ist.

10. Reifen nach einem der Ansprüche 1 bis 9, wobei
der Gürtelcord (36) aus einer organischen Faser ausgebildet ist.

## Revendications

1. Pneu (2) destiné à être utilisé sur un véhicule automobile à deux roues, le pneu (2) comprenant :
une bande de roulement (4) ayant une surface externe qui forme une surface de bande de roulement (18) ;
une paire de parois latérales (6) s'étendant respectivement à partir des extrémités (Pe) de la bande de roulement (4) vers l'intérieur dans une direction radiale ;
une paire de talons (8) disposés respectivement vers l'intérieur des parois latérales (6) dans la direction radiale ;
une carcasse (10) s'étendant sur et entre l'un des talons (8) et l'autre des talons (8), le long des bords internes de la bande de roulement (4) et des parois latérales (6) ; et
une ceinture (12) disposée entre couche, sur la carcasse (10), vers l'intérieur de la bande de roulement (4) dans la direction radiale, dans lequel :
la bande de roulement (4) comprend une région centrale (20), une paire de régions d'épaulement (22) disposées vers l'extrémité de la région centrale dans une direction axiale,
la région centrale (20) et les régions d'épaulement (22) sont chacune formées par une composition de caoutchouc réticulé,
un module Ms de la composition de caoutchouc de chaque région d'épaulement (22) est inférieur à un module Mc de la composition de caoutchouc de la région centrale (20),
la ceinture (12) est formée par une corde de ceinture (36) et un caoutchouc de gommage (34), et
la ceinture (12) s'étend vers l'intérieur des parois latérales (6) dans la direction axiale,
**caractérisé en ce que** :
un rapport Hb/H d'une hauteur Hb allant d'une ligne de base de talon (BL) à une extrémité (Pb) de la ceinture (12) par rapport à une hauteur H allant de la ligne de base de talon (BL) à chaque extrémité (Pe) de la bande de roulement (4) est supérieur ou égal à 0,1 et non supérieur à 0,5, et
un angle d'inclinaison de la corde de ceinture (36) est supérieur ou égal à 70 degrés par rapport au plan d'équateur (CL) du pneu, et non supérieur à 90 degrés.

2. Pneu selon la revendication 1, dans lequel :
le rapport Hb/H est supérieur ou égal à 0,2.

3. Pneu selon la revendication 2, dans lequel :
le rapport Hb/H est supérieur ou égal à 0,3.

4. Pneu selon l'une quelconque des revendications 1 à 3, dans lequel :
le rapport Hb/H n'est pas supérieur à 0,4.

5. Pneu selon la revendication 4, dans lequel :
le rapport Hb/H n'est pas supérieur à 0,3.

6. Pneu selon l'une quelconque des revendications 1 à 5, dans lequel :
l'angle d'inclinaison est supérieur ou égal à 75 degrés.

7. Pneu selon la revendication 6, dans lequel :
l'angle d'inclinaison est supérieur ou égal à 80 degrés.

8. Pneu selon l'une quelconque des revendications 1 à 7, dans lequel :
l'angle d'inclinaison n'est pas supérieur à 85 degrés.

9. Pneu selon la revendication 8, dans lequel :
l'angle d'inclinaison n'est pas supérieur à 80 degrés.

10. Pneu selon l'une quelconque des revendications 1 à 9, dans lequel :
la corde de ceinture (36) est formée par une fibre organique.
